# EUROPÄISCHE PATENTANMELDUNG

(11) **EP 4 559 842 A1**
(43) Veröffentlichungstag der Anmeldung: **28.05.2025**
(21) Anmeldenummer: 23212016.2
(22) Anmeldetag: 24.11.2023
(51) Int. Cl.: B65G 23/44, B65G 47/86, B65G 47/90

(54) **ANSTEUERUNGSVORRICHTUNG SOWIE TRANSPORTVORRICHTUNG**

(71) Anmelder: Tyrolon GmbH, 6395 Hochfilzen (AT)
(72) Erfinder: Schulnig, Ludwig, 6392 St. Jakob i.H. (DE); Schulnig, Elmar, 6392 St. Jakob i.H. (DE)
(74) Vertreter: Meissner Bolte Partnerschaft mbB

(57) **Zusammenfassung**

Die Erfindung betrifft eine Ansteuerungsvorrichtung (10) zum Steuern von Betätigungselementen (52) von Greifarmen (54) einer Greifeinrichtung (56) einer Transportvorrichtung (50) zum Transportieren von flaschenartigen Behältern mit einer ersten Umlenkrolle (12) und einer zweiten Umlenkrolle (14), mit einem Steuerband (16), wobei das Steuerband (16) geschlossen ist und um die erste Umlenkrolle (12) und die zweite Umlenkrolle (14) umlaufend angeordnet ist, mit einer Führungsschiene (18) wobei die Führungsschiene (18) zwischen der ersten Umlenkrolle (12) und der zweiten Umlenkrolle (14) angeordnet ist und das Steuerband (16) kontaktiert, wobei das Steuerband (16)während des Ansteuerns entlang der Führungsschiene (18) führbar ist. Ferner betrifft die Erfindung eine Transportvorrichtung (50) zum Transportieren von flaschenartigen Behältern.

## Beschreibung

Die vorliegende Erfindung betrifft eine Ansteuerungsvorrichtung zum Steuern von Betätigungselementen von Greifarmen einer Greifeinrichtung einer Transportvorrichtung zum Transportieren von flaschenartigen Behältern sowie eine Transportvorrichtung zum Transportieren von Behältern mit mehreren Greifeinrichtungen zum Greifen, Halten und Führen von flaschenartigen Behältern.

Eine derartige Transportvorrichtung zum Greifen, Halten, Führen und/oder Transportieren von insbesondere flaschenartigen Behältern ist bereits aus dem Stand der Technik, insbesondere unter der Bezeichnung "Klammerstern", bekannt und wird bei der fließbandmäßigen Verarbeitung und Handhabung von Behältern eingesetzt. Die Transportvorrichtung weist in der Regel eine Trägerplatte als Basis auf, an der bzw. auf der einzelne Greifvorrichtungen über den Umfang verteilt angebracht sind. In einem automatischen Reinigungs-, Abfüll- oder Etikettiervorgang werden in der Regel mehrere solcher Transportvorrichtungen eingesetzt.

Unter dem Begriff "Behälter" sind im Zusammenhang mit der vorliegenden Erfindung insbesondere, aber nicht ausschließlich, Behälter mit einem im wesentlichen kreisförmigen Querschnitt zu verstehen, z.B. Flaschen oder Dosen oder Gläser, die jeweils in üblicher Weise aus Glas, Metall oder Kunststoff bestehen können. Unter dem Begriff "im Wesentlichen kreisförmig" sind im Zusammenhang mit der vorliegenden Erfindung nicht ausschließlich im geometrischen Sinne rund geformte Behälter zu verstehen, sondern beispielsweise auch ovale, regelmäßig mehreckige usw., die dann insbesondere einen im Wesentlichen kreisförmigen, aber beispielsweise auch ovalen oder mehreckigen Querschnitt aufweisen.

Eine oder mehrere Transportvorrichtungen werden u.a. in einem Prozessablauf zum Reinigen und Befüllen von Behältern verwendet, bei dem die Transportvorrichtungen örtlich so positioniert und eingestellt sind, dass sie die Behälter von Förderbändern aufnehmen und zur nächsten Station, z.B. einer Füll- oder Reinigungsanlage und von dort z.B. zu einer Etikettierstation transportieren. Zu diesem Zweck weist eine Transportvorrichtung Greifeinrichtungen zum Erfassen, Halten und/oder Führen von insbesondere flaschenartigen Behältern auf, die auf einer mit einer Antriebswelle drehbaren Trägerplatte angeordnet und befestigt sind. Eine solche Greifvorrichtung (oder Greifeinheit) für ein Behältertransportsystem weist mindestens ein Greifarmpaar mit zwei Greifarmen auf und kann zwischen einer Greifstellung und einer Öffnungsstellung wechseln. Zum Transport eines Behälters greifen die Greifarme in der Regel unter den Halsring oder bei Flaschen um den Bauch des Behälters. Dabei dient ein Steuernocken als Öffnungsmittel und eine Schraubenfeder oder ein Magnetpaar als Schließmittel der Greifeinrichtung. Der Steuernocken einer Greifeinrichtung wird über eine Schaltklaue als Betätigungsmittel angesteuert, mit deren Hilfe die Greifeinrichtung geöffnet und geschlossen werden kann.

Damit die Greifeinrichtung die zu transportierenden Behälter stabil greifen und führen kann, muss die Greifeinrichtung in einer bestimmten Weise angesteuert werden. Das bedeutet, dass die Greifeinrichtungen der Transportvorrichtung stetig und immer wieder an einem gleichen und vorbestimmten Ort angesteuert werden müssen, um von einer Greifstellung in eine Öffnungsstellung oder umgekehrt wechseln zu können. Dies wird mittels einer Ansteuerungsvorrichtung erreicht, die normalerweise auf der Transportvorrichtung starr befestigt ist. Da die Ansteuerung der Greifeinrichtungen stets an einer gleichen und vorbestimmten Position erfolgen muss, bei einem Eingriff der Ansteuerungsvorrichtung mit der Greifeinrichtung und somit bei deren Betätigung allerdings eine nicht zu unterschätzende Kraft auf die Ansteuerungsvorrichtung wirkt, ist die Ansteuerungsvorrichtung normalerweise stabil und fest mit der Transportvorrichtung verbunden.

Die starre und komplexe Montage der beispielsweise aus der DE102014107538 bekannten Ansteuerungsvorrichtung bedingt eine aufwendige Installation und somit längere Ausfall- bzw. Wartezeiten. Daher bringt der Betrieb einer aus dem Stand der Technik bekannten Ansteuerungsvorrichtung einen erhöhten Wartungs- und Reinigungsaufwand mit sich. Ebenso ist die Installation einer Transportvorrichtung auf Grund Ihres hohen Gewichts und Ihrer komplizierten Struktur schwieriger und zeitaufwendiger. Diese Nachteile führen bei einer Installation als auch bei einer Wartung, wie z.B. einer Justierung oder einer Reinigung, der Transportvorrichtung und deren Ansteuerungsvorrichtung zu längeren Stillstandszeiten der Maschine, des Betriebs und der Produktion und schließlich zu finanziellen Einbußen.

Es ist daher die Aufgabe der vorliegenden Erfindung, eine Ansteuerungsvorrichtung für eine Transportvorrichtung und eine Transportvorrichtung der eingangs genannten Art in vorteilhafter Weise weiterzubilden, insbesondere dahingehend, dass eine leichtere Installation und Wartung der Ansteuerungsvorrichtung ermöglicht und der Aufbau der Transportvorrichtung vereinfacht werden. Zusätzlich bedarf es einer alternativen Ansteuerungsvorrichtung, die weiterhin kompatibel zu den älteren Transportvorrichtungen ist.

Diese Aufgabe wird erfindungsgemäß durch eine Ansteuerungsvorrichtung mit den Merkmalen des Anspruchs 1 sowie mit einer Transportvorrichtung mit den Merkmalen des Anspruchs 12 gelöst.

Danach ist in einem ersten Aspekt der Erfindung eine Ansteuerungsvorrichtung zum Steuern von Betätigungselementen von Greifarmen einer Greifeinrichtung einer Transportvorrichtung zum Transportieren von flaschenartigen Behältern vorgesehen. Die Ansteuerungsvorrichtung weist dabei eine erste Umlenkrolle und eine zweite Umlenkrolle, ein Steuerband, wobei das Steuerband geschlossen ist und um die erste Umlenkrolle und die zweite Umlenkrolle umlaufend angeordnet ist, und eine Führungsschiene, wobei die Führungsschiene zwischen der ersten Umlenkrolle und der zweiten Umlenkrolle angeordnet ist und das Steuerband kontaktiert, wobei das Steuerband während des Ansteuerns entlang der Führungsschiene führbar ist, auf.

Die erfindungsgemäße Ansteuerungsvorrichtung bietet zunächst den Vorteil, dass eine einfachere Installation der Ansteuerungsvorrichtung auf der Transportvorrichtung ermöglicht wird. Dies liegt zum einen an der für ein technisches Personal besseren Zugänglichkeit zur Oberseite der Transportvorrichtung. Dadurch können die Ansteuerungsvorrichtung und deren Ansteuerungselemente leichter justiert werden, um die Positionen zum Greifen und Freigeben der Behälter durch die Greifeinrichtungen festzulegen. Des Weiteren bedarf es bei der Montage der Ansteuerungsvorrichtung auf Grund der Einsetzbarkeit in/auf die Transportvorrichtung keiner bzw. kaum Befestigungsmittel wie z.B. Schrauben. Es muss allerdings darauf geachtet werden, dass sich im eingesetzten Zustand die Position der Ansteuerungsvorrichtung entlang der Antriebsachse nicht verändert. Das bedeutet, dass, sobald die Ansteuerungsvorrichtung fest eingesetzt ist und die Verdrehsicherung noch nicht verbunden bzw. arretiert ist, die Ansteuerungsvorrichtung nur noch einen Rotationsfreiheitsgrad auf der Antriebsachse der Transportvorrichtung hat. Des Weiteren wird die Installation auch dadurch erleichtert, dass die Ansteuerungselemente der Vorrichtung nicht vorab auf eine bestimmte Position ausgerichtet werden müssen. Die rotierbare Lagerung ermöglicht eine Ausrichtung der Ansteuerungsvorrichtung und somit der Positionierung der Ansteuerungselemente gegenüber den Betätigungselementen der Greifeinrichtung, nachdem die Ansteuerungsvorrichtung auf der Transportvorrichtung eingesetzt und drehbar lagernd befestigt wurde.

Aufgrund des vereinfachten Aufbaus der Ansteuerungsvorrichtung ist ein Austauschen der Ansteuerungsvorrichtung als Ganzes denkbar, so dass die Instandhaltung vereinfacht wird und gleichzeitig Ausfallzeiten der Transportvorrichtung reduziert werden.

Dabei sind die Rotationsachsen der ersten Umlenkrolle und der zweiten Umlenkrolle beabstandet zueinander angeordnet. Dabei können die Umlenkrollen so angeordnet sein, dass die Ansteuerungsvorrichtung im Wesentlichen spiegelsymmetrisch ist. Denkbar ist dabei, dass der Abstand der Rotationsachsen variabel einstellbar ist, so dass auf eine Veränderung des Steuerbands, beispielsweise Vergrößerung des Durchmessers des Steuerbands aufgrund des Gebrauchs, eingegangen werden kann, um so die Grundspannung in dem Steuerband halten zu können.

Die Führungsschiene ist bevorzugt so angeordnet, dass sie das Steuerband auf Zug hält und das Gegenlager für Betätigungselemente der Greifeinrichtung bildet, wobei zwischen der Führungsschiene und dem Betätigungselement das Steuerband angeordnet ist. Dadurch wird ein sicheres Ansteuern der Greifeinrichtung gewährleistet und das Betätigen der Betätigungselemente sichergestellt. Zu gleich wird die Abnutzung der Ansteuerungsvorrichtung reduziert, da das Steuerband den Impuls, der beim Auftreffen der Betätigungselemente auf die Ansteuerungsvorrichtung, reduziert und die erste Umlenkrolle und die zweite Umlenkrolle im Betrieb frei mitlaufen können.

Dabei ist es denkbar, dass die Führungsschiene eine Vielzahl von Rollenelementen aufweist, deren Achsen parallel zueinander und zu der ersten Umlenkrolle und der zweiten Umlenkrolle sowie bei Bewegung des Steuerbands orthogonal zu einer Bewegungsrichtung des Steuerbands angeordnet sind, so dass das Steuerband durch den Ansteuerungsprozess über die Vielzahl von Rollenelementen rollbar ist. Das heißt wenn das Steuerband durch den Ansteuerungsprozess bewegt wird, drehen sich die Rollenelemente um ihre jeweiligen Achsen in die jeweilige Bewegungsrichtung des Steuerbandes.

Ein weiterer Vorteil der Ansteuerungsvorrichtung ergibt sich daraus, dass an einer Innenseite des Steuerbands eine erste Struktur vorgesehen ist. Dabei kann an einer Außenseite der ersten Umlenkrolle eine zweite Struktur vorgesehen sein. Zusätzlich oder alternativ kann die zweite Struktur an der zweiten Umlenkrolle vorgesehen sein. Dabei sind die erste Struktur und die zweite Struktur zumindest abschnittsweise korrespondierend, insbesondere formschlüssig ineinandergreifend.

Die korrespondierenden Strukturen erzeugen einen Kraftschluss, der die Übertragung der Kräfte bei der Ansteuerung der Betätigungselemente verbessert. Dadurch wird das Steuerband der Ansteuerungsvorrichtung bei der Betätigung der Betätigungselemente mitgenommen und Schlupf verhindert. Dies reduziert die Abnutzung der Ansteuerungsvorrichtung, insbesondere des Steuerbandes, da durch die Bewegung des Steuerbandes und der Bewegung der Betätigungselemente bei dem Ansteuern der Impuls und damit einhergehend die Aufprallkraft reduziert ist ohne die Funktionsweise der Ansteuerungsvorrichtung negativ zu beeinflussen.

Die erste Struktur und die zweite Struktur können beispielsweise durch einen Zahnriemen und ein entsprechendes Zahnrad bzw. Ritzel zur Verfügung gestellt werden.

Besonders vorteilhaft bei der Ansteuerungsvorrichtung ist es, wenn mindestens eine Vorspannrolle zum Vorspannen des Steuerbands vorgesehen ist, wobei die mindestens eine Vorspannrolle der Führungsschiene gegenüberliegend angeordnet ist.

Die mindestens eine Vorspannrolle kann dabei an der Innenseite des Steuerbands zwischen den Umlenkrollen angeordnet sein. Zusätzlich oder alternativ kann die mindestens eine Vorspannrolle an einer Außenseite des Steuerbands angeordnet sein.

Die Hauptfunktion einer Vorspannrolle besteht darin, sicherzustellen, dass das Steuerband ordnungsgemäß gespannt ist, um eine effiziente und zuverlässige Öffnung der Betätigungselemente zu gewährleisten.

Typischerweise befindet sich die Vorspannrolle zwischen der ersten und der zweiten Umlenkrolle. Sie kann durch verschiedene Mechanismen justiert werden, um die gewünschte Spannung zu erreichen. Die Aufrechterhaltung der richtigen Spannung ist entscheidend, da sie dazu beiträgt, die Lebensdauer des Steuerbands zu verlängern und die Übertragung der Betätigungskraft auf das Betätigungselement zu optimieren.

Mittels der mindestens einen Vorspannrolle kann die Vorspannung des Steuerbands gemessen werden, wobei die Vorspannung ein Indikator der Abnutzung des Steuerbands sein kann und zur Ermittlung der Instandhaltungszyklen dienen kann.

In einer weiteren vorteilhaften Ausgestaltung ist es vorteilhaft, wenn das Steuerband einen flexiblen Kunststoff aufweist.

Ein flexibler Kunststoff bietet eine Reihe von Vorteilen für den Einsatz in einem Steuerband. Diese Vorteile tragen zur Verbesserung der Effizienz und der Lebensdauer des Steuerbandes bei. Der erste Vorteil ist die Flexibilität. Ein flexibler Kunststoff kann sich an verschiedene Formen und Konturen anpassen, was besonders wichtig ist, wenn das Steuerband in Umgebungen mit unebenen Oberflächen oder Strukturen der Umlenkrollen eingesetzt wird.

Ein weiterer wichtiger Vorteil ist die Korrosions- und Feuchtigkeitsbeständigkeit. Kunststoffe sind oft unempfindlicher gegenüber den schädlichen Einflüssen von Feuchtigkeit, Säuren und anderen aggressiven Substanzen als metallene Oberflächen. Die Verwendung eines flexiblen Kunststoffstoffs in einem Steuerband führt zu einer längeren Lebensdauer der Ansteuerungsvorrichtung und verringert den Wartungsaufwand.

Ein weiterer Vorteil ist die Geräuschdämmung. Kunststoffsteuerbänder erzeugen in der Regel weniger Lärm, was die Arbeitsumgebung angenehmer macht und die Einhaltung von Lärmschutzrichtlinien erleichtert.

Dabei kann es sich bei dem Kunststoff in vorteilhafterweise um Polytetrafluorethylen (PTFE), auch bekannt als Teflon, handeln.

Dabei ist es denkbar, dass das Steuerband einen metallverstärkten Kunststoff aufweist.

Dabei kann die Metallverstärkung und deren Position an die Betätigungselemente bzw. den Kontaktbereich zwischen den Betätigungselementen und dem Steuerband angepasst werden.

Die Metallverstärkung erhöht die Festigkeit des Steuerbandes. Zu gleich wird die Widerstandfähigkeit gegenüber Verschleiß und Abrieb erhöht, so dass die Lebensdauer des Steuerbands optimiert wird.

Denkbar ist auch eine Verstärkung durch ein Fasergewirk. Das Fasergewirk kann in dem Kunststoff eingebettet sein oder auf der Innenseite vorgesehen sein. Auch durch ein Fasergewirk kann die Festigkeit erhöht werden. Bei den Fasern kann es sich um Kunststofffasern, Stofffasern oder Metallfasern handeln.

In einer weiteren vorteilhaften Ausgestaltung, weist das Steuerband ein Innenband und ein Außenband auf.

Dies erlaubt ein einfaches Austauschen lediglich eines Teils des Steuerbands. Gleichzeitig kann auf einfach Art und Weise der Kraftschluss zwischen Steuerband und der ersten und/oder zweiten Umlenkrolle hergestellt werden. Gleichzeitig wird dadurch die Möglichkeit eröffnet, verschiedene Materialpaarungen zu verwenden, um auf die jeweiligen benötigten Eigenschaften eingehen zu können.

Dabei kann es besonders vorteilhaft sein, wenn das Innenband ein Metall und/oder einen flexiblen Kunststoff aufweist und dass das Außenband einen flexiblen Kunststoff aufweist.

Auch hier kann der flexible Kunststoff des Steuerbands eine metallische Verstärkung aufweisen.

Dadurch lassen sich das Außenband und/oder das Innenband an den jeweiligen Einsatzbereich anpassen. So kann das Außenband ausgelegt sein, um schneller zu verschleißen als das Innenband, aber gleichzeitig einfacher austauschbar zu sein.

Besonders vorteilhaft ist es, wenn das Innenband des Steuerbands die erste Struktur aufweist.

Dabei kann das Innenband die Struktur zur Erzeugung des Kraftschlusses aufweisen. Beispielsweise kann das Innenband eine umlaufende Kette sein, deren einzelne Glieder in die Struktur der ersten Umlenkrolle und/oder der zweiten Umlenkrolle eingreifen kann.

Denkbar ist dabei auch, dass die erste Struktur auf einer Innenseite des Innenbands des Steuerbandes ist, um den Kraftschluss herzustellen.

In einer weiteren vorteilhaften Ausgestaltung, ist die erste Umlenkrolle antreibbar. Zusätzlich oder alternativ ist die zweite Umlenkrolle antreibbar.

Zum Antrieb der ersten Umlenkrolle und/oder zweiten Umlenkrollen kann ein eigener Aktuator vorgesehen sein. Denkbar ist auch, dass ein Differential vorgesehen ist, um die erste und/oder zweite Umlenkrolle über den Antrieb der Greifeinrichtung anzutreiben.

Mittels der angetriebenen ersten Umlenkrolle und/oder zweiten Umlenkrolle wird das Steuerband auf eine Geschwindigkeit gebracht, wodurch sich der Impuls beim Auftreffen der Betätigungselemente der Greifeinrichtung reduziert. Durch den reduzierten Impuls wiederum reduziert sich der Verschleiß des Steuerbands und somit können die Instandhaltungszyklen sowie Kosten reduziert werden.

In einer weiteren vorteilhaften Ausgestaltung, kann bei der Ansteuerungsvorrichtung eine Grundplatte vorgesehen sein, wobei eine erste Rotationsachse der ersten Umlenkrolle und eine zweite Rotationsachse der zweiten Umlenkrolle im Wesentlichen senkrecht, insbesondere senkrecht, zu der Grundplatte angeordnet sind.

Die die erste Umlenkrolle und die zweite Umlenkrolle sind in vorteilhafter Weise drehbar auf der Grundplatte gelagert. Zusätzlich kann auch mindestens eine Vorspannrolle drehbar auf der Grundplatte vorgesehen sein.

Mittels der Grundplatte können die Positionen der Umlenkrollen und damit einhergehend die Position des Steuerbands einfacher festgelegt werden. Gleichzeitig wird dadurch eine Einheit gebildet, so dass die Handhabung vereinfacht wird.

In einer weiteren Ausgestaltung ist ein erster Koppelmechanismus zum Ein- und Auskoppeln an einer Transportvorrichtung vorgesehen.

Dieser kann in besonders vorteilhafterweise an der Grundplatte vorgesehen sein. Dieser Koppelmechanismus kann eine Art Kupplung, ein Klickmechanismus zum Einklicken an einem entsprechenden Gegenstück oder eine Positionshilfe zum einfache Verschrauben sein.

Dies vereinfacht die Positionierung, allerdings auch die Instandhaltung, da die Ansteuerungsvorrichtung einfach entfernt und ausgetauscht werden kann.

Ein zweiter Aspekt der Erfindung ist eine Transportvorrichtung zum Transportieren von Behältern. Diese Transportvorrichtung umfasst mehrere Greifeinrichtungen zum Greifen, Halten und Führen von flaschenartigen Behältern, wobei die Greifeinrichtungen Betätigungselemente der Greifarme aufweisen, eine Trägerplatte zum Aufnehmen der Greifeinrichtungen, eine Antriebswelle zum Drehen der Trägerplatte sowie eine Ansteuerungsvorrichtung zum Steuern der Betätigungselemente der Greifarme gemäß dem ersten Aspekt der Erfindung.

In einer vorteilhaften Ausgestaltung der Transportvorrichtung ist ein zweiter Koppelmechanismus zum Ein- und Auskoppeln des ersten Koppelmechanismus der Ansteuerungsvorrichtung vorgesehen.

Dieser ist so ausgebildet, dass er das Gegenstück zu dem Koppelmechanismus der Ansteuerungsvorrichtung bildet. Demnach kann es sich auch hier um eine Kupplung, einen Klickmechanismus oder eine Aufnahme zum Verschrauben handeln.

Mittels eines Koppelmechanismus wird sowohl die Austauschbarkeit als auch die Instandhaltung vereinfacht. Dabei kann die Ansteuerungsvorrichtung beim Einbau einfach eingekoppelt und beim Ausbau einfach ausgekoppelt werden.

Des Weiteren kann es von Vorteil sein, wenn ein Differentialgetriebe zum Verteilen der Antriebsenergie der Antriebswelle auf die erste Umlenkrolle und/oder die zweite Umlenkrolle vorgesehen ist und/oder dass ein Aktuator zum Antrieb der ersten Umlenkrolle und/oder der zweiten Umlenkrolle vorgesehen ist.

Durch das Differentialgetriebe bzw. den Aktuator können die erste und/oder zweite Umlenkrolle angetrieben werden, um so das Steuerband auf eine Geschwindigkeit zu bringen. Dadurch kann der Impuls beim Auftreffen der Betätigungselemente der Greifeinrichtung reduziert werden. Durch den reduzierten Impuls wiederum reduziert sich der Verschleiß des Steuerbands und somit können die Instandhaltungszyklen sowie Kosten reduziert werden.

Dabei ist es besonders vorteilhaft, wenn das Differentialgetriebe und/oder der Aktuator ausgelegt ist, die erste Umlenkrolle und/oder die zweite Umlenkrolle so anzutreiben, dass das Steuerband und die Betätigungselemente der Greifeinrichtung die gleiche Geschwindigkeit und Bewegungsrichtung aufweisen.

In diesem Bereich ist der Betrieb der Transportvorrichtung bzw. der Ansteuerungsvorrichtung optimal, denn das Betätigen der Betätigungselemente ist sichergestellt, während der Impuls der beim Auftreffen der Betätigungselemente auf das Steuerband minimal ist. Demnach ist bei einer gleichen Geschwindigkeit des Steuerbands und der Betätigungselemente der Verschleiß am geringsten.
- Figur 1: Draufsicht einer ersten Ausführungsform einer erfindungsgemäßen Ansteuerungsvorrichtung;
- Figur 2: perspektivische Ansicht einer zweiten Ausführungsform einer erfindungsgemäßen Ansteuerungsvorrichtung;
- Figur 3: Draufsicht auf eine erfindungsgemäße Ansteuerungsvorrichtung;
- Figur 4: Ausschnitt A der erfindungsgemäßen Ansteuerungsvorrichtung aus der Figur 3.

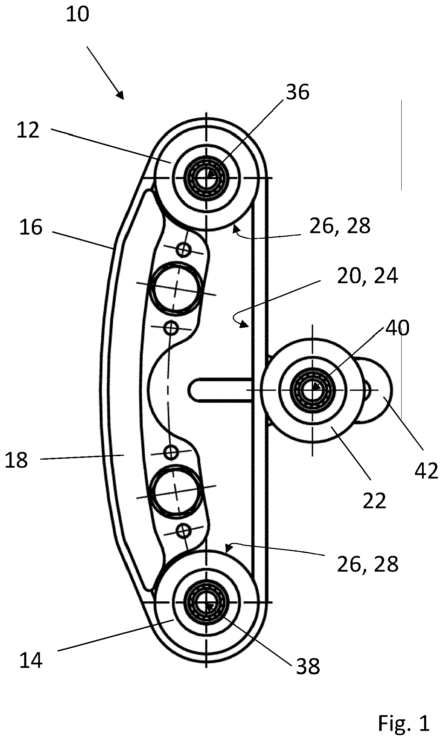

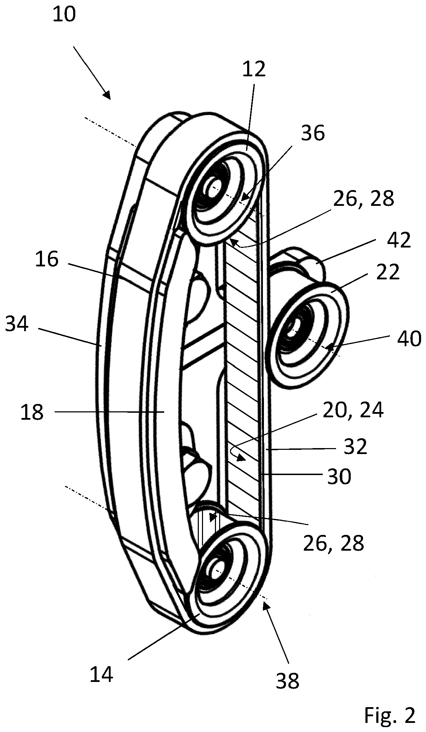

In den Fig. 1 und 2 sind zwei Ansteuerungsvorrichtungen 10 zum Steuern von Betätigungselementen 52 von Greifarmen 54 einer Greifeinrichtung 56 einer Transportvorrichtung 50 zum Transportieren von flaschenartigen Behältern dargestellt. Diese umfassen jeweils eine erste Umlenkrolle 12 und eine zweite Umlenkrolle 14, ein Steuerband 16, wobei das Steuerband 16 geschlossen ist und um die erste Umlenkrolle 12 und die zweite Umlenkrolle 14 umlaufend angeordnet ist, sowie eine Führungsschiene 18, wobei die Führungsschiene 18 zwischen der ersten Umlenkrolle 12 und der zweiten Umlenkrolle 14 angeordnet ist und das Steuerband 16 kontaktiert, wobei das Steuerband 16 während des Ansteuerns entlang der Führungsschiene 18 führbar ist.

Die Führungsschiene 18 kontaktiert dabei das Steuerband 16 auf seiner Innenseite 20, so dass ein Gegenlager zu den Betätigungselementen 52 einer Greifeinrichtung 56 gebildet wird. Gleichzeitig ist die mit dem Steuerband 16 in Kontakt stehende Kontur der Führungsschiene 18 ein Kreissegment.

Zusätzlich ist sowohl in der ersten Ausführungsform als auch in der zweiten Ausführungsform eine Vorspannrolle 22 zum Vorspannen des Steuerbands 16 vorgesehen. Die Vorspannrolle 22 auf einer Außenseite 26 des Steuerbands 16 so angeordnet, dass diese der Führungsschiene 18 gegenüberliegend, aber den Greifeinrichtungen 56 abgewandt angeordnet ist.

Sowohl die erste Ausführungsform als auch die zweite Ausführungsform sehen an einer Innenseite 20 des Steuerbands 16 eine erste Struktur 24 und an einer Außenseite 26 der ersten Umlenkrolle 12 und der zweiten Umlenkrolle 14 eine zweite Struktur 28 vor. Dabei sind die erste Struktur 24 und die zweite Struktur 28 zumindest abschnittsweise korrespondierend. Im Speziellen sind die erste Struktur 24 und die zweite Struktur 28 formschlüssig ineinandergreifend ausgebildet. Die erste Struktur 24 und die zweite Struktur 28 erzeugen einen optimalen Kraftübertrag von der angetriebenen ersten Umlenkrolle 12 auf das Steuerband 16.

Dabei ist das Steuerband 16 der ersten Ausführungsform gemäß Fig.1 monolithisch ausgebildet. Um die Geräusche beim Betätigen der Betätigungselemente 52 im Betrieb der Transportvorrichtung 50 zu reduzieren, weist das Steuerband 16 einen flexiblen Kunststoff auf. Dieser Kunststoff ist mittig metallisch verstärkt, um dadurch die Kräfte beim Auftreffen der Betätigungselemente 52 der Greifeinrichtungen 56 besser aufnehmen zu können bzw. um die Haltbarkeit und Verschließfestigkeit des Steuerbands 16 zu erhöhen.

Das Steuerband 16 der zweiten Ausführungsform gemäß Fig. 2 weist ein Innenband 30 und ein Außenband 32 auf. Dabei weist das Innenband 30 ein Metall, beispielsweise Stahl, auf. Das Außenband 32 weist den flexiblen Kunststoff auf. Dabei erste Struktur 24 ist in dieser Ausführung auf der Innenseite 20 des Innenbands 30 ausgbildet. Dies ermöglicht eine optimale Kraftübertragung von zumindest einer der Umlenkrollen 12, 14 auf das Innenband 30.

Für eine vereinfachte Handhabung sowohl während der Montage als auch im Falle der Instandhaltung, weisen beide Ausführungsformen eine Grundplatte 34 auf. Auf dieser Grundplatte 34 sind die sowohl die erste Umlenkrolle 12, die zweite Umlenkrolle 14 auch die Vorspannrolle 22 angeordnet. Dabei ist die erste Rotationsachse 36der ersten Umlenkrolle 12 und die zweite Rotationsachse 38 der zweiten Umlenkrolle 14 sowie die dritte Rotationsachse 40 der Vorspannrolle 22 senkrecht zu der Grundplatte 34 angeordnet sind. Dabei ist zumindest die Vorspannrolle 22 freilaufend.

Dabei ist an der Grundplatte 34 ein erster Koppelmechanismus 42 vorgesehen, um ein einfaches Ein- und Auskoppeln an einer Transportvorrichtung 50 zu ermöglichen.

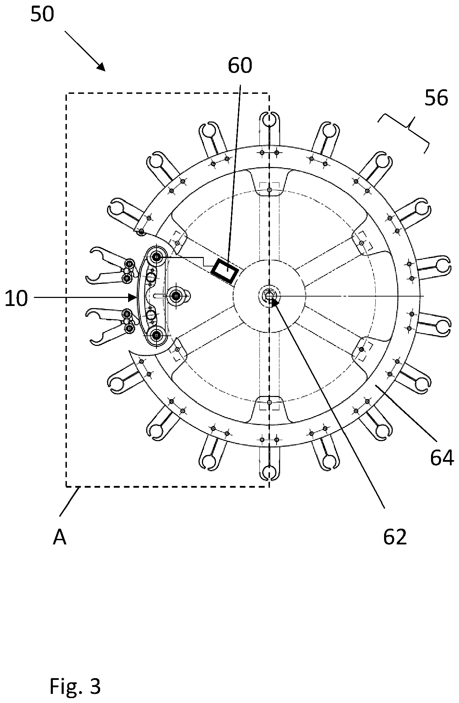

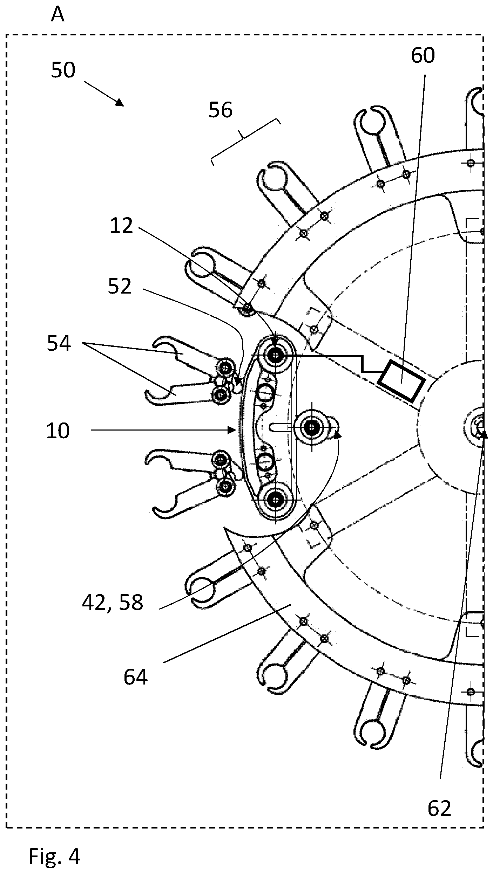

In Fig. 3 und Fig. 4 ist eine Transportvorrichtung 50 zum Transportieren von Behältern dargestellt. Diese weist mehreren Greifeinrichtungen 56 zum Greifen, Halten und Führen von flaschenartigen Behältern auf, welche von der Trägerplatte 44 aufgenommen werden. Dabei sind die Greifeinrichtung 56 gleichverteilt auf dem Umfang der Trägerplatte 44 aufgebracht. Die Greifeinrichtungen 56 weisen die Betätigungselemente 52 der Greifarme 54 auf. Zusätzlich ist eine Antriebswelle 62 zum Drehen der Trägerplatte 44 vorgesehen. Um während der Rotation der Trägerplatte 44 die Greifeinrichtungen 56 mittels ihrer Betätigungselemente 52 Öffnen zu können, ist Ansteuerungsvorrichtung 10 zum Steuern der Betätigungselemente 52 der Greifarme 54 gemäß einer ersten Ausführungsform vorgesehen. Die erste Ausführungsform steht dabei stellvertretend auch für eine Transportvorrichtung 50 mit einer Ansteuerungsvorrichtung 10 gemäß der zweiten Ausführungsform.

Dabei sieht die Transportvorrichtung 50 einen zweiten Koppelmechanismus 58 vor. Der zweite Koppelmechanismus 58 dient dabei zum Ein- und Auskoppeln des ersten Koppelmechanismus der Ansteuerungsvorrichtung.

Ferner ist ein Aktuator 60 zum Antrieb der ersten Umlenkrolle 12 vorgesehen. Dabei wird an dieser Stelle darauf hingewiesen, dass anstelle des Aktuators 60 auch ein Differentialgetriebe zum Verteilen der Antriebsenergie der Antriebswelle 62 auf die erste Umlenkrolle 12 vorliegen kann.

Der Aktuator 60 ist dabei ausgelegt, die erste Umlenkrolle 12 so anzutreiben, dass das Steuerband 16 und die Betätigungselemente 52 der Greifeinrichtung 56 die gleiche Geschwindigkeit und Bewegungsrichtung aufweisen.

### Bezugszeichenliste

- 10: Ansteuerungsvorrichtung
- 12: Erste Umlenkrolle
- 14: Zweite Umlenkrolle
- 16: Steuerband
- 18: Führungsschiene
- 20: Innenseite
- 22: Vorspannrolle
- 24: Erste Struktur
- 26: Außenseite
- 28: Zweite Struktur
- 30: Innenband
- 32: Außenband
- 34: Grundplatte
- 36: Erste Rotationsachse
- 38: Zweite Rotationsachse
- 40: Dritte Rotationsachse
- 42: Erster Koppelmechanismus

- 50: Transportvorrichtung
- 52: Betätigungselemente
- 54: Greifarme
- 56: Greifeinrichtung
- 58: Zweiter Koppelmechanismus
- 60: Aktuator
- 62: Antriebswelle
- 64: Trägerplatte

## Patentansprüche

1. Ansteuerungsvorrichtung (10) zum Steuern von Betätigungselementen (52) von Greifarmen (54) einer Greifeinrichtung (56) einer Transportvorrichtung (50) zum Transportieren von flaschenartigen Behältern
mit einer ersten Umlenkrolle (12) und einer zweiten Umlenkrolle (14),
mit einem Steuerband (16), wobei das Steuerband (16)geschlossen ist und um die erste Umlenkrolle (12) und die zweite Umlenkrolle (14) umlaufend angeordnet ist,
mit einer Führungsschiene (18)
wobei die Führungsschiene (18) zwischen der ersten Umlenkrolle (12) und der zweiten Umlenkrolle (14) angeordnet ist und das Steuerband (16) kontaktiert, wobei das Steuerband (16) während des Ansteuerns entlang der Führungsschiene (18) führbar ist.

2. Ansteuerungsvorrichtung (10) nach Anspruch 1
**dadurch gekennzeichnet,**
**dass** an einer Innenseite (20) des Steuerbands (16) eine erste Struktur (24) vorgesehen ist und dass an einer Außenseite (26) der ersten Umlenkrolle (12) und/oder der zweiten Umlenkrolle (14) eine zweite Struktur (28) vorgesehen ist, wobei die erste Struktur (24) und die zweite Struktur (28) zumindest abschnittsweise korrespondierend, insbesondere formschlüssig ineinandergreifend, sind.

3. Ansteuerungsvorrichtung (10) nach Anspruch 1 oder 2
**dadurch gekennzeichnet,**
**dass** mindestens eine Vorspannrolle (22) zum Vorspannen des Steuerbands (16) vorgesehen ist, wobei die mindestens eine Vorspannrolle (22) der Führungsschiene (18) gegenüberliegend angeordnet ist.

4. Ansteuerungsvorrichtung (10) nach Anspruch 3
**dadurch gekennzeichnet,**
**dass** die mindestens eine Vorspannrolle (22) an der Innenseite (20) des Steuerbands (16) und/oder einer Außenseite (26) des Steuerbands (22) angeordnet ist.

5. Ansteuerungsvorrichtung (10) nach einem der vorhergehenden Ansprüche,
**dadurch gekennzeichnet,**
**dass** das Steuerband (16) einen flexiblen Kunststoff aufweist.

6. Ansteuerungsvorrichtung (10) nach einem der vorhergehenden Ansprüche,
**dadurch gekennzeichnet,**
**dass** das Steuerband (16) ein Innenband (30) und ein Außenband (32) aufweist.

7. Ansteuerungsvorrichtung (10) nach Anspruch 6
**dadurch gekennzeichnet,**
**dass** das Innenband (30) ein Metall und/oder einen flexiblen Kunststoff aufweist und dass das Außenband (32) einen flexiblen Kunststoff aufweist.

8. Ansteuerungsvorrichtung (10) nach Anspruch 6 oder 7
**dadurch gekennzeichnet,**
**dass** das Innenband (30) die erste Struktur (24) aufweist.

9. Ansteuerungsvorrichtung (10) nach einem der vorhergehenden Ansprüche,
**dadurch gekennzeichnet,**
**dass** die erste Umlenkrolle (12) und/oder die zweite Umlenkrolle (14) antreibbar ist.

10. Ansteuerungsvorrichtung (10) nach einem der vorhergehenden Ansprüche,
**dadurch gekennzeichnet,**
**dass** eine Grundplatte (34) vorgesehen ist, wobei eine erste Rotationsachse (36) der ersten Umlenkrolle (12) und eine zweite Rotationsachse (38) der zweiten Umlenkrolle (14) im Wesentlichen senkrecht, insbesondere senkrecht, zu der Grundplatte (34) angeordnet sind.

11. Ansteuerungsvorrichtung (10) nach einem der vorhergehenden Ansprüche,
**dadurch gekennzeichnet,**
**dass** ein erster Koppelmechanismus (42) zum Ein- und Auskoppeln an einer Transportvorrichtung (50) vorgesehen ist.

12. Transportvorrichtung (50) zum Transportieren von Behältern
mit mehreren Greifeinrichtungen (56) zum Greifen, Halten und Führen von flaschenartigen Behältern, wobei die Greifeinrichtungen (56) Betätigungselemente (52) der Greifarme (54) aufweisen,
mit einer Trägerplatte (64) zum Aufnehmen der Greifeinrichtungen (56),
mit einer Antriebswelle (62) zum Drehen der Trägerplatte (64) und
mit einer Ansteuerungsvorrichtung (10) zum Steuern der Betätigungselemente (52) der Greifarme (54) gemäß einem der vorhergehenden Ansprüche.

13. Transportvorrichtung (50) nach Anspruch 12
**dadurch gekennzeichnet,**
**dass** ein zweiter Koppelmechanismus (58) zum Ein- und Auskoppeln des ersten Koppelmechanismus (42) der Ansteuerungsvorrichtung (10) vorgesehen ist.

14. Transportvorrichtung (50) nach Anspruch 12 oder 13
**dadurch gekennzeichnet,**
**dass** ein Differentialgetriebe zum Verteilen der Antriebsenergie der Antriebswelle (62) auf die erste Umlenkrolle (12) und/oder die zweite Umlenkrolle (14) vorgesehen ist und/oder dass ein Aktuator (60) zum Antrieb der ersten Umlenkrolle (12) und/oder der zweiten Umlenkrolle (14) vorgesehen ist.

15. Transportvorrichtung (50) nach Anspruch 14
**dadurch gekennzeichnet,**
**dass** das Differentialgetriebe und/oder der Aktuator (60) ausgelegt ist, die erste Umlenkrolle (12) und/oder die zweite Umlenkrolle (14) so anzutreiben, dass das Steuerband (16)und die Betätigungselemente (52) der Greifeinrichtung (56) die gleiche Geschwindigkeit und Bewegungsrichtung aufweisen.
